# EUROPÄISCHE PATENTSCHRIFT

(11) **EP 2 741 069 B1**
(45) Veröffentlichungstag und Bekanntmachung des Hinweises auf die Patenterteilung: **04.04.2018**
(21) Anmeldenummer: 13195118.8
(22) Anmeldetag: 29.11.2013
(51) Int. Cl.: G01M 5/00

(54) **PRÜFSTAND FÜR EIN ROTORBLATT ODER EIN ROTORBLATTSEGMENT, ANORDNUNG MIT EINEM DERARTIGEN PRÜFSTAND UND PRÜFVERFAHREN**
TEST BENCH FOR A ROTOR BLADE OR A ROTOR BLADE SEGMENT, ARRANGEMENT COMPRISING SUCH A TEST BENCH AND TEST METHOD
BANC D'ESSAI POUR UNE PALE DE ROTOR OU UN SEGMENT DE PALE DE ROTOR, AGENCEMENT DOTÉ D'UN TEL BANC D'ESSAI ET PROCÉDÉ D'ESSAI

(30) Priorität: 05.12.2012 DE 102012111844
(43) Veröffentlichungstag der Anmeldung: 11.06.2014
(73) Patentinhaber: Industrieanlagen-Betriebsgesellschaft mbH, 85521 Ottobrunn (DE)
(72) Erfinder: FRÖSCHL, Jürgen, 85604 Zorneding (DE); KINSCHERF, Simon, 81379 München (DE)
(74) Vertreter: Bohnenberger, Johannes

(56) Entgegenhaltungen:
- EP-A1- 2 336 744
- WO-A1-2004/005879
- WO-A1-2005/024266
- WO-A1-2011/091081
- WO-A1-2012/097475
- WO-A2-2009/112795
- WO-A2-2010/000711

## Beschreibung

Die Erfindung betrifft einen Prüfstand für ein Rotorblatt oder ein Rotorblattsegment, insbesondere ein Rotorblatt oder ein Rotorblattsegment für eine Windkraftanlage, nach dem Oberbegriff des Patentanspruchs 1. Die Erfindung befasst sich ferner mit einer Anordnung mit einem derartigen Prüfstand und einem Rotorblatt oder einem Rotorblattsegment sowie einem Verfahren zum Betreiben des Prüfstands. Aus WO 2008/145727 A1 ist ein Prüfstand der eingangs genannten Art bekannt.

Der bekannte Prüfstand kommt zur Schwingungsprüfung von Rotorblättern zum Einsatz, wobei das Rotorblatt an einem Fundament des Prüfstands in waagrechter Lage montiert wird. Beabstandet vom Fundament ist ein Anregungsaggregat vorgesehen, das am Boden des Prüfstands befestigt ist und über einen Hebel eine Anregungsschwingung auf das Rotorblatt überträgt. Das Anregungsaggregat ist dazu in Form eines Hydraulikzylinders ausgebildet. Durch die Hebelanordnung zwischen dem Hydraulikzylinder und dem Rotorblatt wird die schwingende Masse reduziert. Konkret bedeutet eine Aufwärtsbewegung des Hydraulikzylinders eine Abwärtsbewegung des Rotorblatts. Durch die Hebellänge ist die Auslenkung des Rotorblatts unter Einwirkung des Hydraulikzylinders begrenzt. Zudem berücksichtigt der bekannte Prüfstand die im Realbetrieb auftretenden Betriebslasten, die auf das Rotorblatt wirken, nur unzureichend. Im Realbetrieb entsteht durch die Anströmung der Rotorblätter eine Auftriebskraft, die mit dem bekannten Prüfstand nicht simulierbar ist.

Ähnliche Prüfstände offenbaren WO 2011/091081 A1, WO 2004/005879 A1 und WO 2010/000711 A2. Aus WO 2012/097475 A1 ist ein Gerät zur Durchführung von Inspektionen von Rotorblättern eines Windrades bekannt, das sich über Arme, die nach Art eines Dreibeins angeordnet sind, an der Innenwand eines Rotorblatts abstützen und so im Inneren des Rotorblatts Messungen vornehmen kann.

Aus dem Bereich der Luftfahrttechnik sind außerdem Prüfstände für Rotorblätter oder Turbinenschaufeln bekannt. Derartige Prüfstände sind beispielsweise in WO 2009/112795 A2 und EP 2 336 744 A1 beschrieben.

Die Aufgabe der Erfindung besteht darin, einen Prüfstand für ein Rotorblatt oder ein Rotorblattsegment anzugeben, der die im realen Betrieb auftretenden Betriebslasten gut wiedergibt und insbesondere Auftriebskräfte berücksichtigt. Ferner besteht die Aufgabe der Erfindung darin, eine Anordnung mit einem derartigen Prüfstand sowie ein Verfahren zum Betreiben eines derartigen Prüfstands anzugeben.

Erfindungsgemäß wird diese Aufgabe im Hinblick auf den Prüfstand durch den Gegenstand des Patentanspruchs 1, im Hinblick auf die Anordnung durch den Gegenstand des Patentanspruchs 7, und im Hinblick auf das Betriebsverfahren durch den Gegenstand des Patentanspruchs 8 gelöst.

Insbesondere wird die Aufgabe durch einen Prüfstand für ein Rotorblatt oder ein Rotorblattsegment, insbesondere ein Rotorblatt oder ein Rotorblattsegment für eine Windkraftanlage, gelöst, wobei der Prüfstand wenigstens eine Tragstruktur aufweist, an der ein axiales Ende des Rotorblatts oder des Rotorblattsegments befestigbar ist, und wobei wenigstens ein Anregungsaggregat vorgesehen ist, das zur Anregung einer Schwingung des Rotorblatts oder des Rotorblattsegments mit dem Rotorblatt oder dem Rotorblattsegment verbindbar ist. An einer ortsfesten Anlenkstelle ist ein Lastmittel befestigt. Das Lastmittel ist mit dem Rotorblatt oder dem Rotorblattsegment für den Prüfbetrieb verbindbar derart, dass das Rotorblatt oder das Rotorblattsegment mit einer statischen Vorspannkraft beaufschlagbar ist, deren Kraftrichtung wenigstens eine Komponente aufweist, die senkrecht zum Rotorblatt oder Rotorblattsegment verläuft.

Durch das Lastmittel als Komponente des Prüfstands wird die Realitätsnähe der Prüfung verbessert. Insbesondere kann mit dem Lastmittel eine statische Vorspannkraft auf das Rotorblatt oder das Rotorblattsegment aufgebracht werden, so dass beispielsweise die im Realbetrieb auftretende Auftriebskraft simuliert werden kann. Somit können mit dem erfindungsgemäßen Prüfstand insgesamt realitätsnähere Prüfungen vorgenommen werden, als dies bei den aus dem Stand der Technik bekannten Prüfständen der Fall ist. Der erfindungsgemäße Prüfstand ermöglicht also eine relativ genaue Abbildung der im Realbetrieb auftretenden statischen Betriebslasten.

Es wird darauf hingewiesen, dass die Anlenkstelle bei dem erfindungsgemäßen Prüfstand nur im Prüfbetrieb ortsfest sein kann. Zwischen einzelnen Prüfzyklen kann die Anlenkstelle variabel sein. Mit anderen Worten kann die Anlenkstelle verschoben bzw. versetzt werden, wenn der Prüfstand nicht in Betrieb ist. Im Betrieb bleibt die Anlenkstelle ortsfest, insbesondere um eine gleichmäßig wiederholbare Belastung auf den Prüfkörper aufzubringen.

Bei einer bevorzugten Ausführungsform des erfindungsgemäßen Prüfstands sind mehrere Lastmittel vorgesehen, die an voneinander beabstandet angeordneten Fixierstellen befestigt sind derart, dass das Rotorblatt oder das Rotorblattsegment mit gleicher oder unterschiedlicher Vorspannkraft beaufschlagbar ist. Durch eine Vielzahl von Lastmitteln können über die gesamte Länge des Rotorblatts unterschiedliche Einleitungspunkte für die statische Krafteinleitung festgelegt werden. Dies erhöht weiter die Realitätsnähe der Rotorblattprüfung. Dabei kann vorgesehen sein, dass an unterschiedlichen Lastmitteln unterschiedliche Vorspannkräfte auf das Rotorblatt ausgeübt werden. Somit kann beispielsweise die im realen Betrieb auftretende statische Biegeform des Rotorblatts nachgebildet werden. Insgesamt werden die Einstellmöglichkeiten des Prüfstands auf diese Weise verbessert und die Variationsmöglichkeiten für die Prüfung erhöht.

Das Lastmittel kann durch ein flexibles Zugmittel, insbesondere ein Seil oder eine Kette und/oder durch ein starres Zug-/Druckmittel, insbesondere eine Koppelstange, mit dem Rotorblatt oder dem Rotorblattsegment verbindbar sein. Die Verwendung eines flexiblen Zugmittels hat den Vorteil, dass die Kraftrichtung einfach und schnell variierbar ist. Beispielsweise kann das flexible Zugmittel über eine Umlenkstelle geführt sein, wobei die Position der Umlenkstelle variabel ist. Somit kann auf das Rotorblatt auch eine Vorspannkraft aufgebracht werden, die zumindest teilweise eine waagrechte Kraftkomponente aufweist. Beispielsweise kann das flexible Zugmittel schräg vom Rotorblatt oder vom Rotorblattsegment weg zur Fixierstelle geführt sein. Die Verwendung eines starren Zug-/Druckmittels ermöglicht auch das direkte Einbringen von Drucklasten in das Rotorblatt oder das Rotorblattsegment.

Das Lastmittel kann durch einen Motor, insbesondere einen elektrisch angetriebenen Motor, gebildet sein. Auf diese Weise kann die Vorspannkraft einfach eingestellt werden, beispielsweise in Abhängigkeit des zu prüfenden Rotorblatts bzw. Rotorblattsegments. Ferner kann die Vorspannkraft mit Hilfe des Motors im Prüfbetrieb variiert werden, beispielsweise um unterschiedliche Betriebslastverläufe abzubilden.

Der erfindungsgemäße Prüfstand weist ein Federelement auf, das mit dem Lastmittel verbunden und zwischen dem Lastmittel und dem Rotorblatt oder dem Rotorblattsegment anordenbar ist, so dass das Rotorblatt oder das Rotorblattsegment zur Beeinflussung des Schwingungsverhaltens durch das Federelement mit einer Federkraft beaufschlagbar ist. Somit kann die statische Vorspannkraft, die auf das Rotorblatt oder das Rotorblattsegment wirkt, mit einer dynamischen Schwingung des Rotorblatts oder Rotorblattsegments überlagert werden, wobei durch die Federelemente zusätzlich die Frequenz der Eigenschwingung des Rotorblatts oder Rotorblattsegments erhöht wird. Das verkürzt den für die Schwingungsprüfung erforderlichen Prüfzeitraum. Somit kann mit dem erfindungsgemäßen Prüfstand die Schwingungsprüfung eines Rotorblatts oder Rotorblattsegments in einem relativ kurzen Zeitraum durchgeführt werden, wobei gleichzeitig die im Realbetrieb auftretenden Betriebslasten Berücksichtigung finden.

Bei einer weiteren bevorzugten Ausgestaltung des erfindungsgemäßen Prüfstands ist zwischen dem Lastmittel und dem Rotorblattsegment ein Ausleger vorgesehen, der direkt mit dem Rotorblattsegment verbindbar und mit dem Lastmittel verbunden ist derart, dass das Rotorblattsegment mit einer statischen Vorspannkraft beaufschlagbar ist, deren Kraftrichtung wenigstens eine Komponente aufweist, die parallel zum Rotorblattsegment verläuft. Im Allgemeinen eignet sich der erfindungsgemäße Prüfstand nicht nur zur Prüfung von vollständigen Rotorblättern, sondern ermöglicht auch die Prüfung von Rotorblattsegmenten, beispielsweise eines Rotorblattsegments, das aus einem Teil eines vollständigen Rotorblatts einschließlich der Rotorblattwurzel gebildet ist. Auf diese Weise wird die Länge des zu prüfenden Gegenstands verkürzt, wodurch gleichzeitig die Eigenschwingungsfrequenz erhöht wird. Der erforderliche Prüfzeitraum wird somit reduziert. Gleichzeitig wird durch den mit dem Lastmittel verbundenen Ausleger ermöglicht, die auf das vollständige Rotorblatt wirkenden Kräfte im Rotorblattsegment nachzubilden, insbesondere die Auswirkungen der auf die Rotorblattspitze wirkenden Betriebslasten anhand eines Rotorblattsegments zu simulieren. Dies stellt eine realitätsnahe Prüfung sicher, trotzdem das Rotorblatt nicht im Gesamten sondern lediglich segmentweise einer Prüfung unterzogen wird. Dazu ist konkret vorgesehen, dass eine statische Vorspannkraft auf das Rotorblattsegment aufgebracht wird, die zumindest eine Komponente aufweist, die parallel zum Rotorblattsegment verläuft. Auf diese Weise soll insbesondere die auf die Rotorblattwurzel wirkende Zentrifugalkraft nachgebildet werden.

Gemäß einem nebengeordneten Aspekt beruht die Erfindung auf dem Gedanken, eine Anordnung mit einem zuvor beschriebenen Prüfstand und einem Rotorblatt oder einem Rotorblattsegment, insbesondere für eine Windkraftanlage, anzugeben, wobei das Rotorblatt oder das Rotorblattsegment an der Tragstruktur befestigt und mit dem Lastmittel verbunden ist.

Ein weiterer nebengeordneter Aspekt betrifft ein Verfahren zum Betreiben des zuvor beschriebenen Prüfstands oder der zuvor beschriebenen Anordnung, wobei die Vorspannkraft des Lastmittels derart eingestellt wird, dass die im realen Betrieb auf das Rotorblatt oder das Rotorblattsegment wirkenden Betriebslasten nachgebildet werden.

Die Erfindung wird im Folgenden anhand von Ausführungsbeispielen unter Bezugnahme auf die beigefügten, schematischen Zeichnungen näher erläutert. Darin zeigen
- Fig. 1: eine Seitenansicht eines erfindungsgemäßen Prüfstands nach einem bevorzugten Ausführungsbeispiel, wobei das Lastmittel über ein umgelenktes Zugmittel mit dem Rotorblatt verbunden ist; und
- Fig. 2: eine Seitenansicht eines erfindungsgemäßen Prüfstands nach einem weiteren bevorzugten Ausführungsbeispiel, wobei das Lastmittel über ein Zugmittel und einen Ausleger mit einem Rotorblattsegment verbunden ist.

Der erfindungsgemäße Prüfstand gelangt insbesondere zur Schwingungsprüfung von Rotorblättern 10 zur Anwendung. Im Besonderen eignet sich der Prüfstand für die Prüfung von Rotorblättern 10 von Windkraftanlagen. Dabei können die Rotorblätter 10 als Ganzes oder segmentweise geprüft werden.

Der Prüfstand weist eine Tragstruktur 11 auf, die als von einem Boden 15 aufragendes bzw. am Boden 15 befestigtes Fundament ausgebildet sein kann. Die stabile Tragstruktur 11 weist eine nicht dargestellte Befestigungsvorrichtung für das Rotorblatt 10 auf. Das Rotorblatt 10 wird derart mit dem Fundament 11 verbunden, dass sich das Rotorblatt 10 im Wesentlichen horizontal erstreckt. Das schließt nicht aus, dass sich das Rotorblatt 10 zumindest teilweise aus der Horizontalen erhebt, beispielsweise aufgrund der geometrischen Form des Rotorblatts 10. Die Angabe, wonach die Tragstruktur 11 zur im Wesentlichen horizontalen Befestigung des Rotorblatts 10 geeignet ist, soll lediglich verdeutlichen, dass das Rotorblatt 10 während des Prüfvorgangs der Länge nach frei über dem Boden 15 angeordnet ist. Das Rotorblatt 10 ist wie ein Kragträger an einer Seitenfläche der Tragstruktur 11 befestigt.

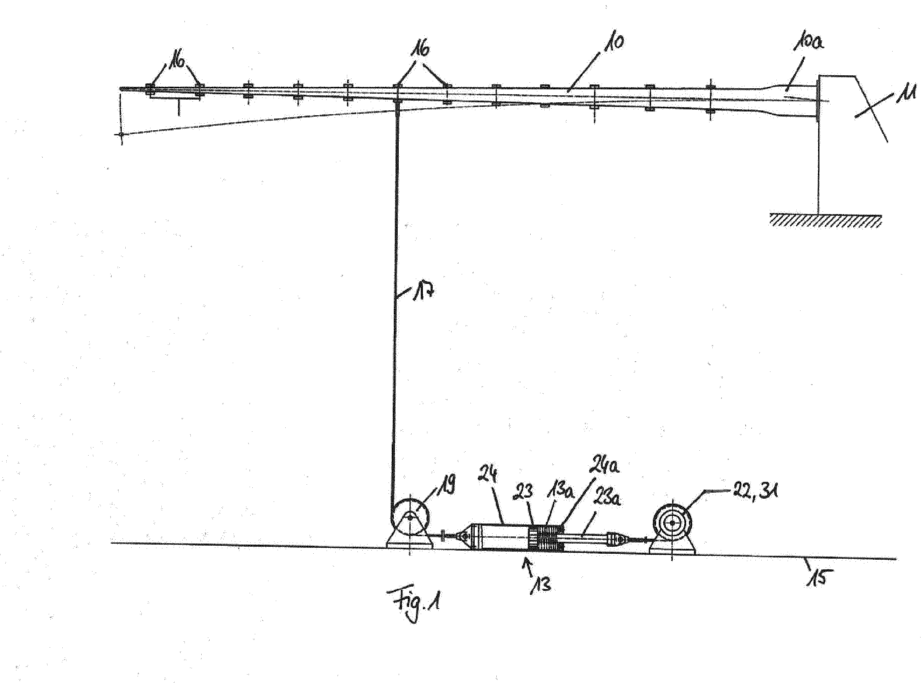

Während des Prüfvorgangs wird das Rotorblatt 10 zu Schwingungen angeregt, um die im Realbetrieb auftretenden zyklischen Lasten zu simulieren. Die Anregung der Schwingungen erfolgt vorzugsweise über ein Anregungsaggregat, das bei dem Ausführungsbeispiel gemäß Fig. 1 als Seilwinde 22 ausgebildet ist. Alternativ kann vorgesehen sein, dass das Anregungsaggregat als Unwuchterreger 12 auf dem Rotorblatt 10 befestigt ist.

Die Seilwinde 22 bildet im Allgemeinen ein Lastmittel 31 zum Aufbringen einer statischen Vorspannkraft auf das Rotorblatt 10. Die Seilwinde 22, die einen elektrischen Antrieb aufweisen kann, kann eine Vorspannung auf ein flexibles Zugmittel 17 aufbringen, das mit dem Rotorblatt 10 verbunden ist. Das flexible Zugmittel 17 bzw. Seil, insbesondere Drahtseil, überträgt die von der Seilwinde 22 aufgebrachte Vorspannkraft auf das Rotorblatt 10, so dass dieses senkrecht zu seiner Längsachse statisch belastet wird. Anstelle eines flexiblen Zugmittels 17 kann auch ein starres Druck-/Zugmittel Anwendung finden, beispielsweise eine Koppelstange. Auf diese Weise können auch Druckbelastungen auf das Rotorblatt 10 übertragen werden.

Im Allgemeinen wird mit der als Lastmittel 31 eingesetzten Seilwinde 22 erreicht, dass das gesamte Rotorblatt 10 während des Prüfvorgangs einer statischen Last ausgesetzt werden kann, wobei durch unterschiedliche Vorspannungen an verschiedenen Haltern 16 beispielsweise die im Betrieb auftretende Auftriebskraft bzw. allgemein die statischen Betriebslasten simulierbar sind. Dies verbessert eine realitätsnahe Simulation bzw. Prüfung, bei der die statischen und zyklischen Lasten überlagert werden.

Bei dem Prüfstand gemäß Fig. 1 ist das Zugmittel 17 bzw. Seil an einer Umlenkrolle 19 umgelenkt und horizontal zur Seilwinde 22 geführt, so dass der Prüfstand eine kompakte Bauweise aufweist. Aus Gründen der Übersichtlichkeit ist lediglich ein einziges Zugmittel 17 dargestellt. Tatsächlich können mehrere derartiger Zugmittel 17 sowie Lastmittel 31 entlang des Rotorblatts 10 angeordnet sein.

Zwischen dem Rotorblatt 10 und der Seilwinde 22, insbesondere zwischen der Umlenkrolle 19 und der Seilwinde 22, ist ein Federelement 13 angeordnet. Das Federelement 13 umfasst einen Zylinder 24, in dem ein Kolben 23 geführt ist. Eine Druckfeder 13a erstreckt sich zwischen dem Kolben 23 und einem Zylinderboden 24a. Der Kolben 23 weist eine Kolbenstange 23a auf, die mit dem Zugmittel 17 bzw. Seil gekoppelt ist. Das Seil verläuft über die Seilrolle 22, die fest mit dem Boden 15 verbunden ist. Die feste Verbindung zwischen der Seilrolle 22 und dem Boden 15 bildet eine Anlenkstelle 14 des Zugmittels 17.

Der Zylinder 24 ist ebenfalls mit einem Seil 17 gekoppelt, das über eine Umlenkrolle 19 zu einem Halter 16 geführt ist. Der Halter 16 ist mit einem Rotorblatt 10 verbindbar bzw. während des Prüfvorgangs mit dem Rotorblatt 10 verbunden. Das Federelement 13 bzw. das Federpaket umfassend die Druckfeder 13a, den Zylinder 24 und den Kolben 23, ist im Wesentlichen horizontal zwischen der Seilrolle 22 und der Umlenkrolle 19 angeordnet. Auf diese Weise wird erreicht, dass die Tragstruktur 11 eine relativ geringe Höhe aufweisen kann, ohne den Federhubweg des Federelements 13 zu beeinträchtigen.

Bei dem Ausführungsbeispiel gemäß Fig. 1 ist das Federelement 13 mit einem einzelnen Halter 16 gekoppelt. Alternativ kann vorgesehen sein, dass jeweils zwei oder mehrere, insbesondere 3 oder 4, Halter 16 über ein Lastgeschirr 18 mit einem einzelnen Federelement 13 verbunden sind. Dies ist in Fig. 1 im Bereich der Blattspitze 10b des Rotorblatts 10 angedeutet.

Um den Zeitbedarf für einen Prüfvorgang zu reduzieren, ist vorgesehen, das Rotorblatt 10 über wenigstens ein Federelement 13 mit dem Boden 15 zu koppeln. Dadurch wird die Steifigkeit erhöht, so dass die Eigenfrequenz gesteigert wird. Somit kann eine vordefinierte Anzahl von Schwingungen in einem relativ kürzeren Testzeitraum durchlaufen werden. Die Zwischenschaltung des Federelements 13 zwischen dem Rotorblatt 10 und dem Boden 15 kann auf unterschiedliche Art und Weise erfolgen.

Mit dem vorgeschlagenen Prüfstand können mehrere unterschiedliche Simulationsparameter einfach eingestellt werden. So ist es beispielsweise möglich, durch eine Verstellung der Vorspannkraft, d.h. durch eine Erhöhung der Seilspannung, die Mittellage der möglichen Biegelinien zu verschieben. Mit anderen Worten kann über eine Verschiebung der Fußpunkte bzw. Anlenkstellen die Mittellage der Biegelinien verändert werden. Überdies ermöglicht der vorgeschlagene Prüfstand die Einstellung von individuellen, insbesondere vorbestimmten, Zielbiegelinien. Die Form der Biegelinien wird durch die Federsteifigkeiten der Federelemente 13 bestimmt. Die Federsteifigkeiten der einzelnen Federelemente 13 können unterschiedlich eingestellt werden. Insbesondere können die Federsteifigkeiten von Federelementen 13 unterschiedlich eingestellt werden, die an Punkten am Rotorblatt 10 angreifen, welche entlang der Spannweite des Rotorblatts 10 benachbart angeordnet sind. Durch gezielte Anpassung der Federsteifigkeiten können verschiedene, individuelle Biegelinienverläufe eingestellt und für den Prüfbetrieb genutzt werden. Wenn als Federelement 13 ein hydropneumatischer Zylinder eingesetzt wird, ist es auch vorstellbar, die Federsteifigkeiten während des Prüfbetriebs zu regeln, so dass die Biegelinie korrigiert bzw. nachjustiert werden kann. So können Abweichungen der Systemparameter im Verlauf des Prüfvorgangs ausgeglichen werden.

Im Allgemeinen kann die Einstellung einer vorgegebenen Biegelinie durch einen Prüfstand für ein Rotorblatt 10 oder ein Rotorblattsegment 20, insbesondere ein Rotorblatt 10 oder ein Rotorblattsegment 20 für eine Windkraftanlage, mit einer Tragstruktur 15 und wenigstens einem Anregungsaggregat ermöglicht werden, wobei an der Tragstruktur 15 ein axiales Ende des Rotorblattes 10 oder des Rotorblattsegments 20 befestigbar ist und das Anregungsaggregat zur Anregung einer Schwingung des Rotorblatts 10 oder des Rotorblattsegments 20 mit dem Rotorblatt 10 oder dem Rotorblattsegment 20 verbindbar ist, wobei mehrere in Längsrichtung des Rotorblatts 10 oder Rotorblattsegments 20 beabstandet zueinander angeordnete Federelemente 13 vorgesehen sind, die jeweils zwischen einer ortsfesten Anlenkstelle 14 und dem Rotorblatt 10 oder dem Rotorblattsegment 20 angeordnet sind und unterschiedliche Federsteifigkeiten aufweisen derart, dass eine vorbestimmte Zielbiegelinie einstellbar ist.

Eine Reduktion der Prüfzeit kann weiter erreicht werden, indem anstelle eines gesamten Rotorblatts 10 ein Rotorblattsegment 20, d.h. ein um die Flügelspitze 10b gekürztes Rotorblatt 10, für die Prüfung verwendet wird. Ein derartiges Rotorblattsegment 20 wird auch als Flügelstumpf 20a bezeichnet. Aufgrund der gegenüber dem gesamten Rotorblatt 10 kleineren Länge es Rotorblattsegments 20 erhöht sich die Eigenfrequenz und folglich die Prüfgeschwindigkeit. Die Kräfte, die bei der Prüfung eines vollständigen Rotorblatts 10 auf die Flügelspitze 10b wirken, können durch konstruktive Maßnahmen des Prüfstands nachgebildet werden.

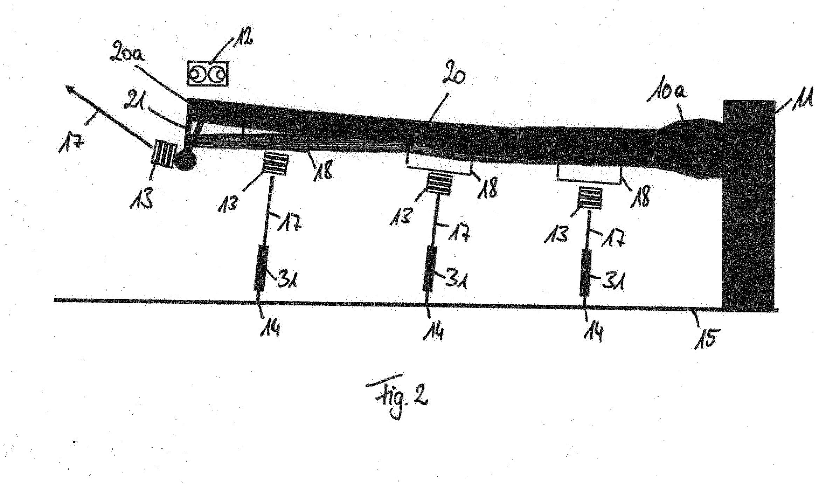

Fig. 2 zeigt eine derartige Variante des Prüfstands, bei dem anstelle eines vollständigen Rotorblatts 10 ein Rotorblattsegment 20 an der Tragstruktur 11 befestigt ist. Das Rotorblattsegment 20 umfasst einen Teil des Rotorblattflügels sowie die Rotorblattwurzel 10a. Über Halter 16 ist das Rotorblattsegment 20 mit Lastgeschirren 18 gekoppelt. Zwischen den Lastgeschirren 18 und jeweils eine Anlenkstelle 14 am Boden 15 ist jeweils ein Federelement 13 angeordnet.

Am Flügelstumpf 20a des Rotorblattsegments 20 ist ein Ausleger 21 befestigt. Der Ausleger 21 erstreckt sich im Wesentlichen senkrecht zum Rotorblattsegment 20 und ist mit einem flexiblen Zugmittel 17, insbesondere einem Seil, verbunden. Die Verbindung zwischen dem Ausleger 21 und dem Zugmittel 17 bzw. Seil erfolgt mittelbar über ein Federelement 13. Das Seil greift unter einem Winkel an dem Ausleger 21 an. So wird über das flexible Zugmittel 17 nicht nur eine senkrechte, sondern auch eine waagrechte Kraftkomponente auf das Rotorblattsegment 20 aufgebracht. Die auf das Rotorblattsegment 20 wirkende Belastung, die bestehen würde, wenn das gesamte Rotorblatt 10 vorhanden wäre, kann somit nachgebildet werden.

Die Anregung der Schwingung erfolgt bei dem Ausführungsbeispiel gemäß Fig. 2 durch einen Unwuchterreger 12, der auf Höhe des Auslegers 21 auf dem Rotorblattsegment 20 montiert ist. Eine andere Anordnung des Unwuchterregers 12 ist möglich. Ferner kann anstelle eins Unwuchterregers 12 eine anderes Anregungsaggregat einsetzt werden. Entsprechende Anregungsaggregate oder Aktuatoren sind dem Fachmann bekannt.

Wegen der kurzen Länge und der entsprechend geringen Masse des Rotorblattsegments 20 im Vergleich zu einem vollständigen Rotorblatt 10 wird gleichzeitig die Eigenfrequenz erhöht. Auf diese Weise kann an dem Rotorblattsegment 20 die Prüfung eines gesamten Rotorblatts 10 simuliert werden und zwar in einem kürzeren Prüfzeitraum, als dies mit konventionellen Methoden möglich ist.

Grundsätzlich können entlang des Rotorblatts 10 mehrere Halter 16 angeordnet sein. Zwischen der Rotorblattwurzel 10a und der Rotorblattspitze 10b sind vorzugsweise in regelmäßigen Abständen Halter 16 angeordnet. Die Halter 16 sind mit den Federelementen 13 verbunden, wobei jeweils ein einzelner Halter 16 mit einem einzelnen Federelement 13 gekoppelt sein kann. Alternativ können zwei Halter 16 mit einem einzelnen Federelement 13, beispielsweise über ein Lastgeschirr 20 gekoppelt sein. Ferner kann vorgesehen sein, dass ein einzelner Halter mit einem einzelnen Federelement 13 verbunden ist, wobei mehrere Kombinationen aus Halter 16 und Federelement 13 mit einer einzigen Anlenkstelle 14 verbunden sind. Dabei sind die einzelnen Kombinationen aus Halter 16 und Federelement 13 mit einem Lastgeschirr 18 zusammengeführt und beispielsweise über ein starres Druck-/Zugmittel 18 bzw. eine Koppelstange oder ein flexibles Zugmittel 17 bzw. ein Seil mit der Anlenkstelle 14 verbunden.

Um die im Realbetrieb auftretende Biegelinie des Rotorblatts 10 nachzubilden, hat es sich weiterhin als vorteilhaft erwiesen, wenn die Federelemente 13, die entlang des Rotorblatts 10 angeordnet sind, mit steigendem Abstand zum Fundament 11 jeweils niedrigere Federsteifigkeiten aufweisen. Insgesamt können die Federelemente 13 also unterschiedliche Federsteifigkeiten umfassen. Das Federelement 13, das der Rotorblattspitze 10b am nächsten ist, weist vorzugsweise die niedrigste Federsteifigkeit auf. Hingegen weist das Federelement, das der Rotorwurzel 10a am nächsten angeordnet ist, vorzugsweise die höchste Federsteifigkeit auf.

Entsprechend kann die statische Vorspannkraft entlang des Rotorblatts oder des Rotorblattsegments variiert werden. Beispielsweise können entlang des Rotorblatts mehrere Lastmittel 31, insbesondere Seilwinden 22, angeordnet sein, die unterschiedliche Vorspannkräfte auf das Rotorblatt 10 oder das Rotorblattsegement 20 aufbringen. Der Betrag der Vorspannkräfte kann beispielsweise zur Rotorblattspitze 10b bzw. zum Flügelstumpf 20a hin ansteigen. Dies gibt die tatsächlich auftretenden statischen Belastungen durch Auftriebskräfte, die durch die Anströmung des Rotorblatts 10 im Betrieb wirken, gut wieder.

Der Prüfstand ist grundsätzlich zur Prüfung aller Arten von Rotorblättern 10 oder ähnlichen, flügelartigen Elementen bzw. allgemein länglichen, biegeflexiblen Bauteilen geeignet. Beispielsweise könnten mit dem erfindungsgemäßen Prüfstand auch Flugzeugflügel bzw. Tragflächen einer Schwingungsprüfung unterzogen werden. Besonders bevorzugt ist der Einsatz des Prüfstands zum Prüfen von Rotorblättern 10 für Windkraftanlagen, insbesondere Rotorblättern 10 unterschiedlicher Länge und Bauweise. Der Prüfstand ist insgesamt flexibel einsetzbar und umfasst auch unterschiedliche Lastgeschirre 18 bzw. Halter 16, die für verschiedene Rotorblattquerschnitte angepasst sind.

### Bezugszeichenliste

- 10: Rotorblatt
- 10a: Rotorblattwurzel
- 10b: Rotorblattspitze
- 11: Tragstruktur
- 12: Unwuchterreger
- 13a: Druckfeder
- 13: Federelement
- 14: Anlenkstelle
- 15: Boden
- 16: Halter
- 17: flexibles Zugmittel
- 18: Lastgeschirr
- 19: Umlenkrolle
- 20: Rotorblattsegment
- 20a: Flügelstumpf
- 21: Ausleger
- 22: Seilwinde
- 23: Kolben
- 23a: Kolbenstange
- 24: Zylinder
- 24a: Zylinderboden
- 31: Lastmittel

## Patentansprüche

1. Prüfstand für ein Rotorblatt (10) oder ein Rotorblattsegment (20) für eine Windkraftanlage,
- mit einer Tragstruktur (15), an der ein axiales Ende des Rotorblatts (10) oder des Rotorblattsegments (20) befestigbar ist, und
- wenigstens einem Anregungsaggregat (12, 21), das zur Anregung einer Schwingung des Rotorblatts (10) oder des Rotorblattsegments (20) mit dem Rotorblatt (10) oder dem Rotorblattsegment (20) verbindbar ist,
wobei ein Lastmittel (21, 31) an einer Anlenkstelle (14) befestigt und mit dem Rotorblatt (10) oder dem Rotorblattsegment (20) für den Prüfbetrieb verbindbar ist derart, dass das Rotorblatt (10) oder das Rotorblattsegment (20) mit einer statischen Vorspannkraft beaufschlagbar ist, deren Kraftrichtung wenigstens eine Komponente aufweist, die senkrecht zum Rotorblatt (10) oder Rotorblattsegment (20) verläuft,
**dadurch gekennzeichnet, dass**
der Prüfstand ein Federelement (13) aufweist, das mit dem Lastmittel (31) verbunden und zwischen dem Lastmittel (31) und dem Rotorblatt (10) oder dem Rotorblattsegment (20) anordenbar ist derart, dass das Rotorblatt (10) oder das Rotorblattsegment (20) zur Beeinflussung des Schwingungsverhaltens durch das Federelement (13) mit einer Federkraft beaufschlagbar ist.

2. Prüfstand nach Anspruch 1,
**dadurch gekennzeichnet, dass**
mehrere Lastmittel (31) vorgesehen sind, die an voneinander beabstandet angeordneten Anlenkstellen (14) befestigt sind derart, dass das Rotorblatt (10) oder das Rotorblattsegment (20) mit gleicher oder unterschiedlicher Vorspannkraft beaufschlagbar ist.

3. Prüfstand nach Anspruch 1 oder 2,
**dadurch gekennzeichnet, dass**
das Lastmittel (31) durch ein flexibles Zugmittel oder ein starres Zug-/Druckmittel mit dem Rotorblatt (10) oder dem Rotorblattsegment (20) verbindbar ist.

4. Prüfstand nach Anspruch 3,
**dadurch gekennzeichnet, dass**
das flexible Zugmittel ein Seil oder eine Kette und/oder das starre Zug-/Druckmittel eine Koppelstange ist.

5. Prüfstand nach einem der vorhergehenden Ansprüche,
**dadurch gekennzeichnet, dass**
das Lastmittel (31) durch einen Motor gebildet ist.

6. Prüfstand nach einem der vorhergehenden Ansprüche,
**dadurch gekennzeichnet, dass**
zwischen dem Lastmittel (31) und dem Rotorblattsegment (20) ein Ausleger (21) vorgesehen ist, der direkt mit dem Rotorblattsegment (20) verbindbar und mit dem Lastmittel (31) verbunden ist derart, dass das Rotorblattsegment (20) mit einer statischen Vorspannkraft beaufschlagbar ist, deren Kraftrichtung wenigstens eine Komponente aufweist, die parallel zum Rotorblattsegment (20) verläuft.

7. Anordnung mit einem Prüfstand gemäß einem der vorhergehenden Ansprüche und einem Rotorblatt (10) oder einem Rotorblattsegment (20) für eine Windkraftanlage, wobei das Rotorblatt (10) oder das Rotorblattsegment (20) an der Tragstruktur (11) befestigt und mit dem Lastmittel (31) verbunden ist.

8. Verfahren zum Betreiben eines Prüfstands nach einem der Ansprüche 1 bis 6 oder einer Anordnung nach Anspruch 7, wobei die Vorspannkraft des Lastmittels derart eingestellt wird, dass die im realen Betrieb auf das Rotorblatt (10) oder das Rotorblattsegment (20) wirkenden Betriebslasten nachgebildet werden.

## Claims

1. Test rig for a rotor blade (10) or a rotor blade segment (20) for a wind turbine
- having a support structure (15) to which it is possible to attach one axial end of the rotor blade (10) or of the rotor blade segment (20), and
- at least one excitation unit (12, 21) which can be connected to the rotor blade (10) or the rotor blade segment (20) in order to excite an oscillation of the rotor blade (10) or of the rotor blade segment (20),
wherein a loading means (21, 31) is attached to an articulation point (14) and can be connected to the rotor blade (10) or the rotor blade segment (20) for the testing operation such that a static prestress force, whose force direction comprises at least one component oriented perpendicular to the rotor blade (10) or rotor blade segment (20), can be applied to the rotor blade (10) or the rotor blade segment (20),
**characterized in that**
the test rig has a spring element (13) which is connected to the loading means (31) and can be arranged between the loading means (31) and the rotor blade (10) or the rotor blade segment (20) such that a spring force can be applied to the rotor blade (10) or the rotor blade segment (20) by means of the spring element (13) in order to influence the oscillation behaviour.

2. Test rig according to Claim 1,
**characterized in that**
there are provided multiple loading means (31) which are attached to mutually spaced apart articulation points (14) such that the rotor blade (10) or the rotor blade segment (20) can be subjected to identical or different prestress forces.

3. Test rig according to Claim 1 or 2,
**characterized in that**
the loading means (31) can be connected to the rotor blade (10) or the rotor blade segment (20) by a flexible tension means or a rigid push/pull means.

4. Test rig according to Claim 3,
**characterized in that**
the flexible tension means is a rope or a chain and/or the rigid push/pull means is a coupling rod.

5. Test rig according to one of the preceding claims,
**characterized in that**
the loading means (31) consists of a motor.

6. Test rig according to one of the preceding claims,
**characterized in that**
there is provided, between the loading means (31) and the rotor blade segment (20), a jib (21) which can be directly connected to the rotor blade segment (20) and is connected to the loading means (31) such that a static prestress force, whose force direction comprises at least one component oriented parallel to the rotor blade segment (20), can be applied to the rotor blade segment (20).

7. Arrangement having a test rig according to one of the preceding claims and a rotor blade (10) or a rotor blade segment (20) for a wind turbine, wherein the rotor blade (10) or the rotor blade segment (20) is secured to the support structure (11) and is connected to the loading means (31).

8. Method for operating a test rig according to one of Claims 1 to 6, or an arrangement according to Claim 7, wherein the prestress force of the loading means is set so as to reproduce the operational loads acting on the rotor blade (10) or the rotor blade segment (20) in real operation.

## Revendications

1. Banc d'essai pour une pale de rotor (10) ou pour un segment de pale de rotor (20) pour une éolienne,
- comprenant une structure de support (15) au niveau de laquelle peut être fixée une extrémité axiale de la pale de rotor (10) ou du segment de pale de rotor (20), et
- au moins un groupe d'excitation (12, 21) qui peut être connecté à la pale de rotor (10) ou au segment de pale de rotor (20) pour provoquer une oscillation de la pale de rotor (10) ou du segment de pale de rotor (20), un moyen de charge (21, 31) étant fixé à un point d'articulation (14) et pouvant être connecté à la pale de rotor (10) ou au segment de pale de rotor (20) pour le fonctionnement d'essai de telle sorte que la pale de rotor (10) ou le segment de pale de rotor (20) puisse être sollicité(e) avec une force de précontrainte statique dont la direction de force présente au moins une composante qui s'étend perpendiculairement à la pale de rotor (10) ou au segment de pale de rotor (20),
**caractérisé en ce que**
le banc d'essai présente un élément de ressort (13) qui est connecté au moyen de charge (31) et qui peut être disposé entre le moyen de charge (31) et la pale de rotor (10) ou le segment de pale de rotor (20) de telle sorte que la pale de rotor (10) ou le segment de rotor (20) puisse être sollicité(e) par l'élément de ressort (13) avec une force de ressort en vue d'influencer le comportement d'oscillation.

2. Banc d'essai selon la revendication 1,
**caractérisé en ce que**
plusieurs moyens de charge (31) sont prévus, lesquels sont fixés à des points de liaison (14) disposés à distance les uns des autres de telle sorte que la pale de rotor (10) ou le segment de pale de rotor (20) puisse être sollicité (e) avec une force de précontrainte identique ou différente.

3. Banc d'essai selon la revendication 1 ou 2,
**caractérisé en ce que**
le moyen de charge (31) peut être connecté à la pale de rotor (10) ou au segment de pale de rotor (20) par un moyen de traction flexible ou un moyen de traction/compression rigide.

4. Banc d'essai selon la revendication 3,
**caractérisé en ce que**
le moyen de traction flexible est un câble ou une chaîne et/ou le moyen de traction/compression rigide est une barre d'accouplement.

5. Banc d'essai selon l'une quelconque des revendications précédentes,
**caractérisé en ce que**
le moyen de charge (31) est formé par un moteur.

6. Banc d'essai selon l'une quelconque des revendications précédentes,
**caractérisé en ce**
**qu'**entre le moyen de charge (31) et le segment de pale de rotor (20) est prévu un bras de potence (21) qui peut être connecté directement au segment de pale de rotor (20) et qui est connecté au moyen de charge (31) de telle sorte que le segment de pale de rotor (20) puisse être sollicité avec une force de précontrainte statique dont la direction de force présente au moins une composante qui s'étend parallèlement au segment de pale de rotor (20).

7. Agencement comprenant un banc d'essai selon l'une quelconque des revendications précédentes et une pale de rotor (10) ou un segment de pale de rotor (20) pour une éolienne, la pale de rotor (10) ou le segment de pale de rotor (20) étant fixé(e) à la structure porteuse (11) et étant connecté(e) au moyen de charge (31).

8. Procédé pour faire fonctionner un banc d'essai selon l'une quelconque des revendications 1 à 6 ou un agencement selon la revendication 7, dans lequel la force de précontrainte du moyen de charge est ajustée de telle sorte que les charges fonctionnelles agissant pendant le fonctionnement réel sur la pale de rotor (10) ou sur le segment de pale de rotor (20) soient reproduites.
